# EUROPÄISCHE PATENTSCHRIFT

(11) **EP 2 238 010 B1**
(45) Veröffentlichungstag und Bekanntmachung des Hinweises auf die Patenterteilung: **25.05.2011**
(21) Anmeldenummer: 09705504.0
(22) Anmeldetag: 10.01.2009
(51) Int. Cl.: B61C 9/26, B61C 9/52

(54) **LÄNGENVERSTELLBARE WELLE**
LENGTH-ADJUSTABLE SHAFT
ARBRE RÉGLABLE EN LONGUEUR

(30) Priorität: 31.01.2008 DE 102008007153
(43) Veröffentlichungstag der Anmeldung: 13.10.2010
(73) Patentinhaber: Voith Patent GmbH, 89522 Heidenheim (DE)
(72) Erfinder: STARBATTY, Frank, 89522 Heidenheim (DE); RICHTER, Herbert, 73432 Aalen (DE)
(74) Vertreter: Dr. Weitzel & Partner
(86) Internationale Anmeldenummer: PCT/EP2009/000099
(87) Internationale Veröffentlichungsnummer: WO 2009/095150

(56) Entgegenhaltungen:
- EP-A- 0 465 440
- DE-C- 918 007
- FR-A- 2 697 596
- GB-A- 2 343 154
- US-A- 4 308 729
- US-A- 4 819 755
- US-A1- 2001 007 831

## Beschreibung

Die Erfindung betrifft eine längenverstellbare Welle, umfassend ein äußeres und ein inneres Axialteil, die teleskopartig miteinander zusammenarbeiten. Solche Wellen sind zum Beispiel Kardanwellen, die bei Walzwerken zum Antreiben von Walzen verwendet werden. Wellen der genannten Art werden aber auch im Fahrzeugbau angewandt, beispielsweise bei Radsätzen von Schienenfahrzeugen. Siehe SE 0702642. Die Erfindung geht von diesem Stand der Technik aus.

Dabei umfasst die Welle zwei axiale Teile, nämlich ein äußeres, hülsenförmiges Axialteil, und ein inneres Axialteil. Das innere Axialteil ist teleskopartig innerhalb des äußeren Axialteiles in axialer Richtung begrenzt verschiebbar. Die Länge der gesamten Welle lässt sich somit in gewissen Grenzen ändern.

Zwischen den beiden Axialteilen ist ein Lager vorgesehen. Dieses kann beispielsweise drei oder mehrere Wälzlager umfassen. Die Lager sind mit ihrer Längsachse senkrecht zur Drehachse der Walze angeordnet. Jedes Lager ist vom inneren Axialteil getragen, und greift in eine Längsnut des hülsenförmigen äußeren Axialteils ein. Die Lager sind dabei mit einem Schmiermittel geschmiert, beispielsweise mit Öl. Das innere Axialteil weist einen Expansionsraum auf, ferner eine Stirnwand, die in den Raum eintaucht, der vom hülsenförmigen äußeren Axialteil umschlossen ist.

In der Stirnwand ist eine Belüftungsöffnung vorgesehen. Diese stellt eine leitende Verbindung zwischen den beiden genannten Hohlräumen her. Wird die Welle verkürzt durch Einschieben des inneren Axialteiles in den äußeren Axialteil, so wird Luft in den Hohlraum verdrängt. Die Luft wird hierbei komprimiert und übt damit eine Dämpfungswirkung aus.

Ein Problem besteht darin, dass sich im Laufe der Zeit Schmiermittel in der Belüftungsöffnung absetzt und die Öffnung verschließt. Dies geht darauf zurück, dass sich während des Betriebes in dem vom äußeren Axialteil umschlossenen Raum Schmiermitteldämpfe ansammeln, die sich in der Belüftungsöffnung niederschlagen.

Der Erfindung liegt die Aufgabe zugrunde, eine längeneinstellbare Welle gemäß dem Oberbegriff von Anspruch 1 derart zu gestalten, dass sich die Belüftungsöffnung entweder gar nicht mehr zusetzt, oder längere Zeit als bisher offen bleibt.

Diese Aufgabe wird durch die Merkmale von Anspruch 1 gelöst.

Demgemäß umfasst die Belüftungsöffnung wenigstens eine Bohrung, deren Längsachse exzentrisch zur Drehachse der Welle verläuft oder gegen diese in radialer Richtung versetzt ist. Die Längsachse der Bohrung wird dabei im Allgemeinen parallel zur Drehachse der Welle verlaufen.

Dies führt beim Betrieb der Welle zu folgendem Ergebnis:
Aus der mit Schmiermittelnebel beladenen Luft wird sich zwar nach wie vor Schmiermittel in der Bohrung niederschlagen. Aufgrund der Exzentrizität der Längsachse der Bohrung gegenüber der Drehachse der Welle schlägt sich Schmiermittel jedoch nur im radial äußeren Bereich der Bohrung nieder, so dass der radial innere Bereich der Bohrung frei bleibt. Es entsteht somit kein geschlossener Schmiermittelring in der Bohrung. Vielmehr ist der Schmiermittel-Niederschlag - in einem zur Bohrungs-Längsachse senkrechten Schnitt gesehen - mondsichelförmig. Es hat sich gezeigt, dass das niedergeschlagene Schmiermittel bei der erfindungsgemäßen Ausführung aus der Bohrung in den Hohlraum des inneren Axialteiles abströmt, wo er keinen Schaden anrichten kann.

Statt einer einzigen Bohrung können auch zwei oder mehrere Bohrungen vorgesehen werden, die um die Drehachse der Welle herum gruppiert sind.

Der Stand der Technik sowie die Erfindung sind anhand der Zeichnung näher erläutert. Darin ist im Einzelnen Folgendes dargestellt:
- Figur 1: zeigt ein bekanntes Drehgestell für ein Schienenfahrzeug. Das Drehgestell umfasst zwei längenveränderbare Wellen.
- Figur 2: zeigt einen Ausschnitt aus einer Welle, teilweise in einem Axialschnitt.
- Figur 3: zeigt einen Radialschnitt durch den Gegenstand von Figur 2 gemäß der Schnittebene III - III.
- Figur 4: zeigt in einem Axialschnitt eine erfindungsgemäße Welle.
- Figur 5: zeigt in vergrößerter Darstellung einen Belüftungseinsatz - siehe Ausschnitt X in Figur 4.
- Figur 6: zeigt den Belüftungseinsatz in perspektivischer Darstellung.

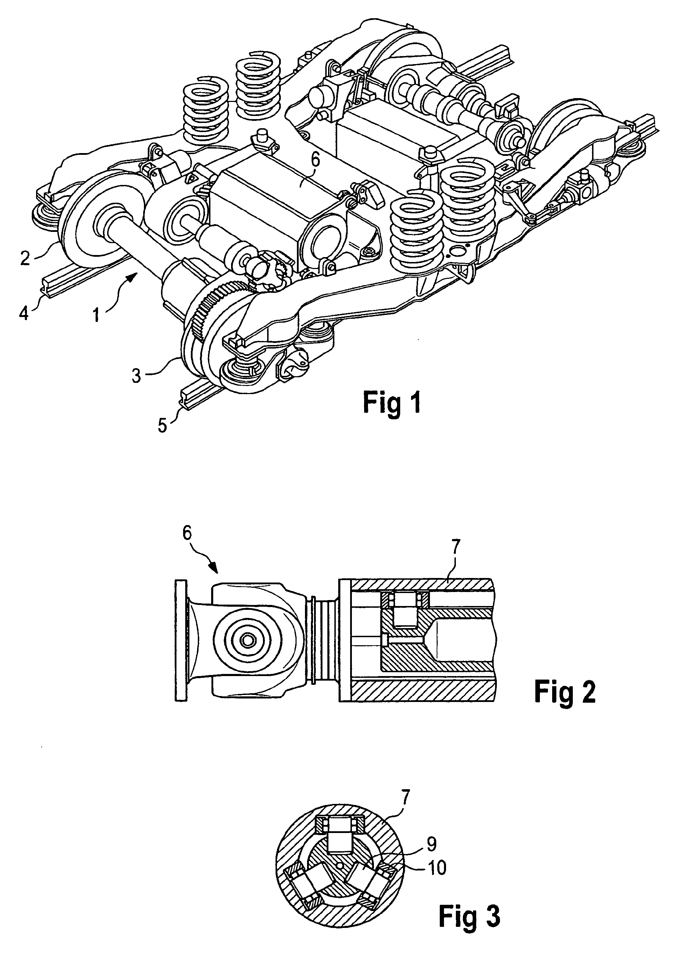

Der in Figur 1 gezeigte Radsatz für ein Schienenfahrzeug weist zwei Wellen auf, von denen hier nur auf die Welle 1 eingegangen werden soll. Die Länge der Welle 1 ist verstellbar. Die Welle trägt an ihren beiden Enden je ein Rad 2, 3. Die Räder sind auf Schienen 4, 5 abrollbar.

Jedem Rad 2, 3 ist jeweils ein Kardangelenk 6 vorgeschaltet. Die Welle 1 umfasst ein äußeres Axialteil 7 und ein inneres Axialteil 8. Axialteil 7 ist hülsenförmig. Es stützt sich über drei Lager auf den inneren Axialteil 8 ab. Die drei Lager (Tripoden) sind in der Schnittansicht in Figur 3 dargestellt. Das innere Axialteil 8 weist Sackbohrungen auf. In jede Sackbohrung ist ein Lagerzapfen 9 eingelassen. Dieser trägt ein Wälzlager 10. Das Wälzlager 10 greift in eine Längsnut im äußeren Axialteil 7 ein.

Die drei Wälzlager 10 rollen somit bei einer Teleskopbewegung des äußeren und des inneren Axialteiles 7, 8 in den Längsnuten ab.

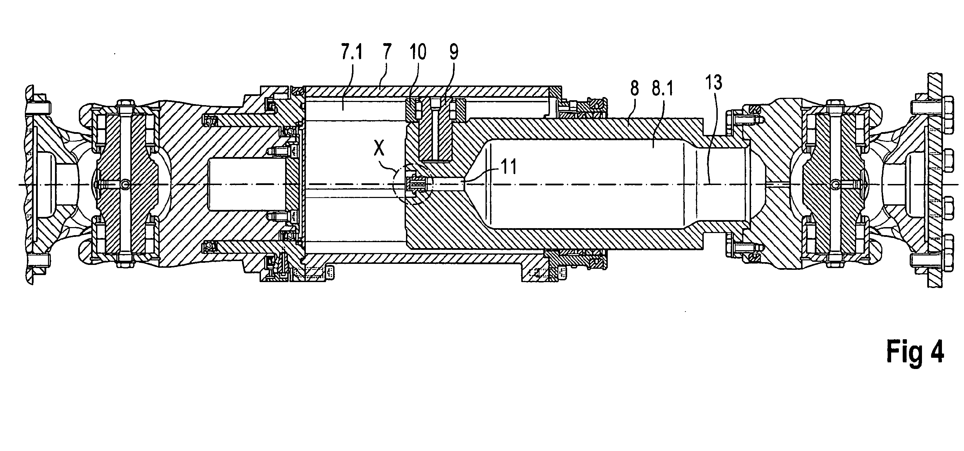

Aus Figur 4 erkennt man den Aufbau der gesamten Welle wie folgt:
Die Welle weist das äußere Axialteil 7 und das innere Axialteil 8 auf. Am Ende der Welle befindet sich jeweils ein Kardangelenk 6.

Das innere Axialteil 8 ragt zu einem wesentlichen Teil in den vom äußeren Axialteil 7 umschlossenen Raum hinein, so dass nur noch ein restlicher Hohlraum 7.1 verbleibt. Das innere Axialteil 8 umschließt einen Pufferraum 8.1. Hohlraum 7.1 und Pufferraum 8.1 stehen miteinander in leitender Verbindung, und zwar über eine Belüftungsöffnung 11. In diese ist ein Bohrungseinsatz 12 eingeschraubt.

Man erkennt einen der drei Lagerzapfen 9 mit dem zugehörenden Wälzlager 10, das ölgeschmiert ist.

Hohlraum 7.1 enthält ein Gemisch aus Luft und Schmiermittelnebel.

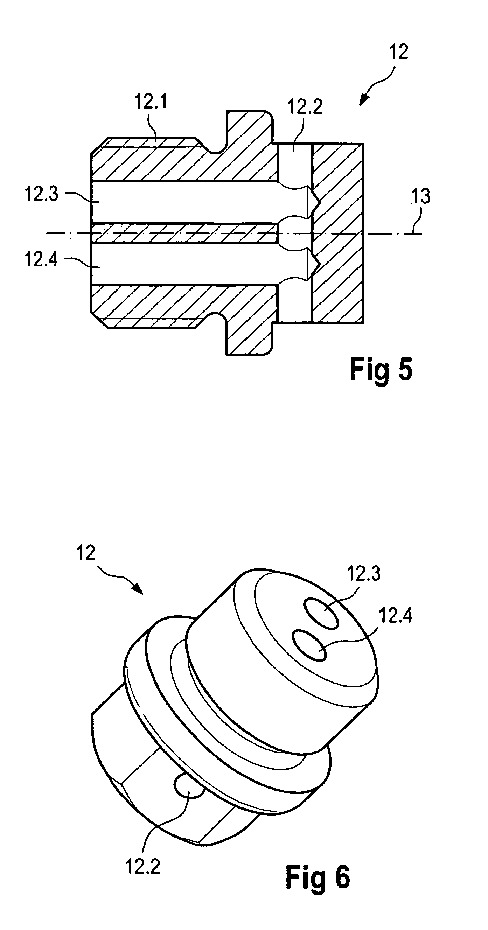

Die Gestaltung des Bohrungseinsatzes 12 erkennt man aus den Figuren 5 und 6. Der Bohrungseinsatz 12 weist ein Gewinde 12.1 auf, mit dem er in die Belüftungsöffnung 11 eingeschraubt ist. Er ist mit einer Radialbohrung 12.2 versehen sowie mit zwei Axialbohrungen 12.3 und 12.4. Die Axialbohrungen 12.3 und 12.4 verlaufen senkrecht zur Drehachse 13 der Welle 1. Sie sind in radialer Richtung gegen die Drehachse 13 versetzt.

Aus dem genannten Schmiermittelnebel schlägt sich im Laufe des Betriebes der Welle 1 Schmiermittel an den Flächen der Bohrungen 12.2, 12.3 und 12.4 nieder. Da die beiden Axialbohrungen 12.3 und 12.4 jedoch gegen die Drehachse 13 versetzt sind, schlägt sich Schmiermittel zufolge der Fliehkraft nur im radial äußeren Flächenbereich der Bohrungen 12.3 und 12.4 nieder. Ein Zusetzen der Bohrungen wird vermieden oder zumindest zeitlich verzögert.

Auch können die beiden Axialbohrungen 12.3, 12.4 gegen die Drehachse 13 der Welle 1 geneigt sein, und zwar in dem Sinne, dass sie sich zum Pufferraum 8.1 hin von der Drehachse 13 entfernen. Dies begünstigt ein Abfließen von niedergeschlagenem Schmiermittel zum Pufferraum 8.1.

## Patentansprüche

1. Längenverstellbare Welle, umfassend
1.1 ein äußeres, hülsenförmiges Axialteil (7);
1.2 ein inneres Axialteil (8), das teleskopartig in das äußere Axialteil (7) einschiebbar, und aus dem äußeren Axialteil (7) ausfahrbar ist, und das einen Pufferraum (8.1) umschließt;
1.3 mit einem Lager (9, 10), das zwischen den beiden Axialteilen (7, 8) angeordnet und mit einem Schmiermittel schmierbar ist;
1.4 das in das äußere Axialteil (7) einschiebbare Ende des inneren Axialteiles (8) weist eine Stirnwand auf;
1.5 es ist eine Belüftungsöffnung (11) vorgesehen, die den Pufferraum (8.1) mit dem vom äußeren Axialteil (7) umschlossenen Hohlraum (7.1) leitend verbindet;
**gekennzeichnet durch** die folgenden Merkmale:
1.6 die Belüftungsöffnung (11) umfasst wenigstens eine Bohrung (12.3, 12.4), die gegen die Drehachse (13) der Welle (1) versetzt ist.

2. Längenverstellbare Welle nach Anspruch 1, **dadurch gekennzeichnet, dass** ein Bohrungseinsatz (12) vorgesehen ist, der wenigstens eine Axialbohrung (12.3, 12.4) aufweist.

3. Längenverstellbare Welle nach einem der Ansprüche 1 oder 2, **dadurch gekennzeichnet, dass** der Axialbohrung beziehungsweise den Axialbohrungen (12.3, 12.4) eine Radialbohrung (12.2) vorgeschaltet ist.

4. Längenverstellbare Welle nach einem der Ansprüche 2 oder 3, **dadurch gekennzeichnet, dass** der Bohrungseinsatz (12) in die Belüftungsöffnung (11) einschraubbar ist.

5. Längenverstellbare Welle nach einem der Ansprüche 1 bis 4, **dadurch gekennzeichnet, dass** wenigstens eine Axialbohrung (12.3, 12.4) gegen die Drehachse (13) der Welle (1) geneigt ist und sich in Richtung auf den Pufferraum (8.1) von der Drehachse (13) entfernt.

## Claims

1. An adjustable-length shaft, comprising
1.1 an outer, sleeve-shaped axial part (7);
1.2 an inner axial part (8), which is telescopically insertable into the outer axial part (7), and extendable out of the outer axial part (7), and which encloses a buffer chamber (8.1);
1.3 having a bearing (9, 10), which is situated between the two axial parts (7, 8) and can be lubricated using a lubricant;
1.4 the end of the inner axial part (8) which is insertable into the outer axial part (7) has a front wall;
1.5 a ventilation opening (11) is provided, which conductively connects the buffer chamber (8.1) to the cavity (7.1) enclosed by the outer axial part (7);
**characterized by** the following features:
1.6 the ventilation opening (11) comprises at least one hole (12.3, 12.4), which is offset in relation to the rotational axis (13) of the shaft (1).

2. The adjustable-length shaft according to Claim 1, **characterized in that** a hole insert (12) is provided, which has at least one axial hole (12.3, 12.4).

3. The adjustable-length shaft according to one of Claims 1 or 2, **characterized in that** a radial hole (12.2) is connected upstream from the axial hole or the axial holes (12.3, 12.4).

4. The adjustable-length shaft according to one of Claims 2 or 3, **characterized in that** the hole insert (12) can be screwed into the ventilation opening (11).

5. The adjustable-length shaft according to one of Claims 1 to 4, **characterized in that** at least one axial hole (12.3, 12.4) is inclined in relation to the rotational axis (13) of the shaft (1) and moves away from the rotational axis (13) in the direction toward the buffer chamber (8.1).

## Revendications

1. Arbre réglable en longueur, comprenant
1.1 une partie axiale extérieure (7) en forme de manchon ;
1.2 une partie axiale intérieure (8) pouvant s'insérer de façon télescopique dans la partie axiale extérieure (7) et sortir de la partie axiale extérieure (7) et renfermant un espace tampon (8.1) ;
1.3 avec un palier (9, 10) qui est disposé entre les deux parties axiales (7, 8) et qui peut être lubrifié avec un lubrifiant ;
1.4 l'extrémité de la partie axiale intérieure (8) pouvant s'insérer dans la partie axiale extérieure (7) présentant une paroi d'extrémité ;
1.5 une ouverture d'aération (11) étant prévue, qui met en communication l'espace tampon (8.1) et la cavité (7.1) renfermée par la partie axiale extérieure (7) ;
**caractérisé en ce que** :
1.6 l'ouverture d'aération (11) comprend au moins un alésage (12.3, 12.4) qui est décalé par rapport à l'axe de rotation (13) de l'arbre (1).

2. Arbre réglable en longueur selon la revendication 1, **caractérisé en ce qu'**il est prévu un insert d'alésage (12) qui présente au moins un alésage axial (12.3, 12.4).

3. Arbre réglable en longueur selon l'une des revendications 1 ou 2, **caractérisé en ce qu'**un alésage radial (12.2) est prévu en amont de l'alésage axial ou des alésages axiaux (12.3, 12.4),

4. Arbre réglable en longueur selon l'une des revendications 2 ou 3, **caractérisé en ce que** l'insert fileté (12) peut être vissé dans l'ouverture d'aération (11).

5. Arbre réglable en longueur selon l'une des revendications 1 à 4, **caractérisé en ce qu'**au moins un alésage axial (12.3, 12.4) est incliné par rapport à l'axe de rotation (13) de l'arbre (1) et s'éloigne de l'axe de rotation (13) en direction de l'espace tampon (8.1).
